# EUROPEAN PATENT APPLICATION

(11) **EP 3 798 778 A1**
(43) Date of publication of application: **31.03.2021**
(21) Application number: 19200475.2
(22) Date of filing: 30.09.2019
(51) Int. Cl.: G05B 23/02

(54) **METHOD AND SYSTEM FOR DETECTING AN ANOMALY OF AN EQUIPMENT IN AN INDUSTRIAL ENVIRONMENT**

(71) Applicant: Siemens Energy Global GmbH & Co. KG, 81739 München (DE)
(72) Inventor: Chodisetty, Lakshmi Sirisha, 560103 Bangalore, Karnataka (IN); Joshi, Janaki, 560100 Bengaluru, Karnataka (IN); Raveendran, Varsha, 560062 Bangalore, Karnataka (IN); Sharma, Akash, Bangalore, Karnataka 562157 (IN)
(74) Representative: Patentanwaltskanzlei WILHELM & BECK

(57) **Abstract**

The present invention relates a method and system for detecting an anomaly of an equipment (110) in an industrial environment (100). In an embodiment, the method comprises receiving an original input equipment data from one or more equipment (110) in a technical installation (102) via a communication network (104). The equipment data comprises one or more sensor data associated with the one or more equipment (110). Further, the method comprises generating a reconstructed input equipment data associated with one or more equipment (110) based on a deep learning model. Also, the method comprises determining an anomaly associated with the original input equipment data based on a deviation between the original input equipment data and the reconstructed input equipment data. Furthermore, the method comprises validating the determined anomaly associated with the original input equipment data based on an anomalous prediction score. Additionally, the method comprises outputting the validated anomaly associated with the original input equipment data on a user interface of user devices (108A-N).

## Description

The present invention generally relates to the field of condition monitoring systems, and more particularly relates to a method and system for detecting an anomaly of an equipment in an industrial environment.

Typically, condition monitoring systems aim at locally measuring key parameters of an equipment at the field. This is achieved by smart sensors embedded at proximity to the equipment or on the surface of the equipment. The condition monitoring systems apply to a large spectrum of power equipment, such as switching devices or transformers. The key parameters of such equipment may include equipment characteristic data, equipment health data, equipment specification data, measurable values of the equipment, and the like. Such key parameters are then used by supervisory systems to determine current or real time state of the equipment. The real-time state of the equipment is further analyzed to predict real time conditions, behavior and performance of the equipment. For example, the real-time state of the equipment is used for detecting fault conditions of the equipment. Fault conditions for an equipment such as a transformer may occur due to oil leaks, mechanical or electrical defaults, normal wear and tear, insulation degradation, overloading of the system, lightning or even human error.

A common method for detecting fault conditions of such equipment is to perform a comparative analysis on the key parameters of the equipment. Specifically, the method compares subsequently measured values of the equipment with a range of acceptable values of the same equipment and generates a signal when the subsequently measured value falls outside a range of acceptable values, referenced as a fault or an anomaly. The anomalies thus detected may always not be authentic and may sometimes include false positives. For example, a key parameter of the equipment such as top oil temperature in a transformer may be significantly higher on one day of a month. This key parameter may be identified as a faulty condition of the transformer in the condition monitoring system. However, when the actual weather conditions around the transformer on that particular day of the month is analyzed to be hot, then one would assess that the identified fault is a false positive and not actually a fault or an anomaly. This may be because the top oil temperature was high due to external conditions and not because of any malfunctioning of the equipment. Similarly, for example, if top oil temperatures obtained throughout one day shows different patterns of values at morning, afternoon, evening and night, then one would assess that the identified fault may be a false positive due to changing weather conditions throughout the day and changing load conditions throughout the day. Therefore, dependency on such key parameters alone for detecting anomalies or faults of the equipment may not always be accurate and may result in damage to the equipment if adverse action is taken on the false positive detected.

Another common approach used for detecting fault conditions of such equipment is to visualize behavior of the equipment using the key parameters obtained from the equipment via the smart sensors.

The visualization may be in the form of trend graphs or three-dimensional models. However, such approach may result in human errors due to hidden, invisible or unclear variations in the behavioral visualizations of the equipment, which may lead to inaccurate detection of fault conditions.

Yet another approach used for detecting fault conditions of such equipment includes developing a model to identify if there is true anomaly or fault in the behavior of the equipment using supervised learning. This approach may not be scalable due to sheer number of equipment. The supervised learning requires labelled data, which is the historical data annotated with whether the key parameters are normal or anomalous. Usually, it is seen that obtaining or collating labelled data for anomalous behavior is challenging. This process always requires a dependency on domain experts in annotating such data.

In any of the above approaches, anomaly detection of the power equipment is completely based on the key parameters, which is the real-time data obtained from the power equipment through the smart sensors. However, it is crucial to note that it is not always safe to depend alone on the key parameters of the equipment as data signatures of such equipment may change over time as they age. For example, anomaly detection mechanism developed for less aged equipment may not be ideal or suitable for aged equipment.

Therefore, there is always a constant need for developing context-based anomaly detection mechanism, which is more accurate, scalable and dynamic and is suitable to different types of equipment.

Therefore, it is an object of the present invention to provide a method and system for detecting an anomaly of an equipment in an industrial environment.

The object of the present invention is achieved by a method for detecting an anomaly of an equipment in an industrial environment. The method comprises receiving an original input equipment data from one or more equipment in a technical installation. The original equipment data comprises one or more sensor data associated with the one or more equipment. The one or more sensor data comprises measurable operating values of the equipment, ambient conditions data, weather condition data, and the like. For example, the measurable operating values of the equipment comprises temperature values, pressure value, current values, voltage value, oil level value and the like. The one or more equipment may be any kind of power equipment. For example, the one or more equipment may be a transformer and/or a circuit breaker. In an alternate embodiment, the one or more equipment may be a capacitor bank, a converter, a power switch, a circuit breaker and the like. The technical installation may be an industrial plant. The communication network may be a wireless connection (i.e., internet) or a wired connection (LAN, WLAN, industrial ethernet or the like). In an embodiment, the communication network may be a short range communication (for example, Bluetooth, WiFi, RFID, NFC or any other) and/or a long range communication network (for example, internet, ethernet cable, Industrial Ethernet, or the like) .

Further, the method comprises generating a reconstructed input equipment data associated with one or more equipment based on a deep learning model. The reconstructed input equipment data is a processed original input equipment data which is a mirror of the original input equipment data. The reconstructed input equipment data comprises feature vectors similar to the original input equipment data along with one or more reconstruction errors. Alternatively, the reconstructed input equipment data may not comprise any reconstruction error but comprise the feature vectors similar to the original input equipment data. The deep learning model is an artificial intelligence based mathematical model representing the feature vectors of the original input equipment data.

Also, the method comprises determining an anomaly associated with the original input equipment data based on a deviation between the original input equipment data and the reconstructed input equipment data. The anomaly may be a faulty condition of the equipment.

Furthermore, the method comprises validating the determined anomaly associated with the original input equipment data based on an anomalous prediction score. The anomalous prediction score is computed based on the total number of anomalous scores computed by each auto encoder and the total number of auto encoders. The process of computing anomalous score is described below. Additionally, the method comprises outputting the validated anomaly associated with the original input equipment data on a user interface of user devices.

In a preferred embodiment, in generating the reconstructed input equipment data associated with the one or more equipment based on the deep learning model, the method comprises computing one or more input feature vectors for the original equipment data. The input feature vectors are a vector comprising sensor data of the equipment. The input feature vector is as the feature vector of any known machine learning techniques. Further, the method comprises determining correlation between the one or more input feature vectors comprised in the original input equipment data. Also, the method comprises generating a compressed knowledge representation of the original input equipment data based on the determined correlation between the one or more input feature vectors. The compressed knowledge representation is output of the encoder function, in case of an auto encoder and is a representation of original input equipment data

The method further comprises generating a deep learning model based on the generated compressed knowledge representation of the original input equipment data. Additionally, the method comprises generating the reconstructed input equipment data associated with the one or more equipment based on the generated deep learning model.

In another preferred embodiment, the method comprises allocating the computed one or more input feature vectors to one or more auto encoders based on buffer size of the one or more auto encoders.

In an aspect of the preferred embodiment, in generating the compressed knowledge representation of the original input equipment data based on the determined correlation between the one or more input feature vectors, the method comprises encoding the original input equipment data into a compressed form using an encoder function. The compressed form of original input equipment data comprises a real valued vector representation with number of values (equal to the number of neurons in middle most layer of an auto encoder). The number of values in the compressed knowledge representation is usually less than the values in the one or more input features vector. The encoder function is defined as h=f(x), where h is compressed representation obtained after encoding the original input equipment data using f(x) and f(x) is the encoder function.
Further, the method comprises generating the compressed knowledge representation based on the encoded input equipment data.

In yet another preferred embodiment, in generating the reconstructed input equipment data associated with the one or more equipment based on the generated deep learning model, the method comprises decoding the compressed form of the original input equipment data into the reconstructed input equipment data based on the generated deep learning model. This is achieved using a decoder function r=g(h), where r is reconstructed input and g(h) is decoder function.

In a preferred embodiment, in determining the anomaly associated with the original input equipment data based on the deviation between the original input equipment data and the reconstructed input equipment data, the method comprises determining a deviation between the original input equipment data and the reconstructed input equipment data. Further, the method comprises computing a reconstruction error for the reconstructed input equipment data based on the determined deviation. The reconstructed errors measure the difference between the original input equipment data and the consequent reconstructed input equipment data. The reconstruction error is derived by L(X, X^), where X is the original input vector for a given timestamp and X^ is the reconstructed input equipment data.

Furthermore, the method comprises determining an anomaly score based on the computed reconstruction error. The anomaly score indicates the anomaly associated with the original input equipment data. The anomaly score is derived by L(X, X^) + regularizer. A regularizer discourages memorization/overfitting. L(X, X^) is the reconstruction error. A scaling parameter is added in front of the regularization term so as to adjust the trade-off between the two objectives. The first objective is model has to be sensitive to the inputs (taken care by the term L(x, x^) in the loss function). The second objective is to avoid overfitting (taken care by the regularizer in the loss function). Also, here reconstruction error is the anomaly score and loss function is L(x, x^) + regularizer.

In another preferred embodiment, in validating the determined anomaly associated with the original input equipment data based on the anomalous prediction score, the method comprises obtaining the anomaly score from one or more deep learning models associated with each auto encoders. The method comprises computing the anomalous prediction score for the reconstructed input equipment data based on the obtained anomaly score and total number of auto encoders. Further, the method comprises validating the determined anomaly associated with the original input equipment data based on the anomalous prediction score and predefined set of rules. The predefined set of rules may comprise any standard validation rules known in the art.

In yet another preferred embodiment, the method comprises updating the deep learning model with the validated anomaly associated with the original input equipment data. Further, the method comprises storing the updated deep learning model in a storage.

In yet another preferred embodiment, in outputting the validated anomaly associated with the original input equipment data on the user interface of the user device(s), the method comprises generating a notification message comprising the validated anomaly associated with original input equipment data. The notification message comprises an event identifier, the input feature vector, deep learning model weight matrix, and inference label of validated anomaly. Further, the method comprises determining neighboring anomaly agents deployed in plurality of technical installations. Furthermore, the method comprises broadcasting the generated notification message to the determined neighboring agents deployed in plurality of technical installations via a network.

In still another preferred embodiment, the method comprises learning data signatures of each equipment in the technical installation, considering change in trend of data captured by the one or more sensing units. These trends could be seasonal where the patterns of original input equipment data may vary for example based on day or night conditions or for example, season-based conditions (such as winter, summer and the like). The learning also considers the noise associated with each equipment in the technical installation. Due to this learning, contextual anomalies are learnt without any prior knowledge of the operational conditions of the equipment.

The object of the present invention is also be achieved by a computing system for detecting an anomaly of an equipment in an industrial environment. The cloud computing system may comprise one or more processors and a memory coupled to the one or more processors. The memory comprises an anomaly management module stored in the form of machine-readable instructions and executable by the one or more processors.

The anomaly management module is configured for performing the method described above.

In a preferred embodiment, the anomaly management module comprises a deep learning network of one or more auto encoders capable of detecting the anomaly of the equipment. Each of the one or more auto encoders comprise a buffer memory.

The object of the invention can also be achieved by a technical installation. The technical installation comprises one or more equipment and one or more sensing units coupled to the one or more equipment. The one or more sensing units are configured for capturing real-time equipment data associated with the one or more equipment. In an embodiment, the real-time equipment data may be the original input equipment data associated with the one or more equipment as mentioned above. The technical installation further comprises a computing system comprising an anomaly management module communicatively coupled to the one or more sensing units. The anomaly management module is configured for performing a method as descried above. Further, the technical installation also comprises an agent communicatively coupled to the computing system and one or more neighboring agents deployed in one or more neighboring technical installations.

The object of the invention can also be achieved by an industrial environment comprising one or more user devices and one or more technical installation. The one or more technical installation comprises a computing system. Further, the industrial environment comprises a cloud computing system communicatively coupled to the one or more technical installation and the one or more user devices via a network.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of an industrial environment capable of detecting anomalies of an equipment, according to an embodiment of the present invention;
- FIG 2: is a block diagram of a computing system such as those shown in FIG 1, depicting various components to implement embodiments of the present invention;
- FIG 3: is a block diagram of an anomaly management module, such as those shown in FIG 1 and 2, capable of detecting anomalies of an equipment, according to the embodiment of the present invention;
- FIG 4: is a block diagram of a deep learning module such as those shown in FIG. 3, according to an embodiment of the present invention;
- FIG 5: is a process flowchart illustrating an exemplary method of detecting anomalies of an equipment, according to the embodiment of the present invention;
- FIG 6: is a process flowchart illustrating an exemplary method of detecting anomalies of an equipment, according to another embodiment of the present invention;
- FIG 7: is a process flowchart illustrating an exemplary method of validating anomaly associated with an original input equipment data based on anomalous prediction score, according to an embodiment of the present invention;
- FIG 8: is a graphical representation of detected anomaly on a user interface of a user device, according to an embodiment of the present invention; and
- FIG 9: is a schematic representation of an industrial environment capable of detecting anomalies of an equipment, according to another embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

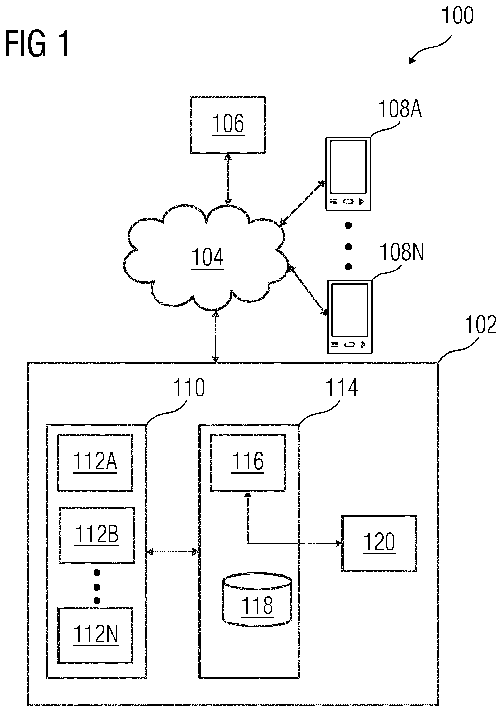

FIG 1 is a schematic representation of an industrial environment 100 capable of detecting anomalies of an equipment, according to an embodiment of the present invention. Particularly, FIG 1 depicts a cloud computing system 106 which is capable of delivering cloud applications for managing a technical installation 102. The technical installation comprises one or more equipment 110, a computing system 114 and an agent 120.

The one or more equipment 110 may include power devices such as transformers, switches, robots, switches, automation devices, motors, valves, pumps, actuators, sensors, HVDC converters and other industrial equipment. The one or more equipment may be internet of things (IoT) enabled. In an exemplary embodiment, the one or more equipment 110 such as a transformer comprises a housing, that is a tank, a core positioned inside the housing, and at least one cooling unit operably attached to the housing. The transformer 110 may comprise a winding element partially surrounding the core. The cooling unit disclosed herein may employ an active cooling such as forced convection and/or a passive cooling such as natural convection. The cooling unit comprises, for example, a plurality of radiator fins at least partially surrounding the transformer tank. The core and the winding element, if present, are at least partially immersed in the fluid for cooling and electrical insulation. As used herein the term "fluid" refers to one or more insulating media employed in any transformer for insulation and cooling of the transformer. The fluid comprises, for example, insulating liquids such as mineral oil, silicone liquid, synthetic esters, natural esters, etc., or insulating gases such as sulphur hexafluoride SF₆.

The one or more equipment 110 comprises one or more sensing units 112A-N. The one or more sensing unit 112A-N may be sensors embedded at multiple positions on the equipment 110. The one or more sensing unit 112A-N is configured for capturing real-time equipment data associated with the one or more equipment 110. The real time equipment data comprises temperature values, pressure values, oil levels, weather condition values, and any other data measured by one or more sensing units placed in the vicinity of the equipment 110 or embedded to the one or more equipment 110. Specifically, the one or more sensing unit 110 senses the real-time data of the equipment 110 and transmits the sensed real-time data of the equipment 110 to the computing system 114. In an alternate embodiment, the sensed real-time equipment data is also transmitted to the cloud computing system 106 via the network 104. As used herein the communication network 104, refers to, for example, any wired or wireless network such as the internet, an intranet, that implements Bluetooth® of Bluetooth Sig, Inc., a network that implements Wi-Fi® of Wi-Fi Alliance Corporation, an ultra-wideband communication network (UWB), a wireless universal serial bus (USB) communication network, a communication network that implements ZigBee® of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a long-term evolution (LTE) mobile communication network, a public telephone network, etc., a local area network, a wide area network, an internet connection network, an infrared communication network, etc., or a network formed from any combination of these networks.

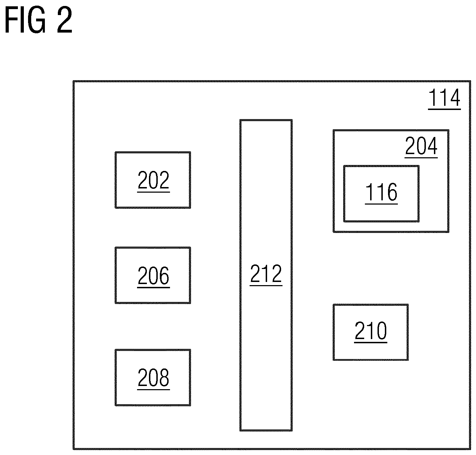

The computing system 114 comprises an anomaly management module 116 and a storage 118. The computing system 114 also comprise a processor, a memory, a storage unit, input output unit and a display unit. A detailed view of various components of the computing system 114 is shown in FIG 2. The computing system 114 may be a standalone system or a system on a cloud. In a preferred embodiment, the computing system 114 is an edge system capable of detecting anomalies of the one or more equipment 110.

The anomaly management module 116 is stored in the form of machine-readable instructions and executable by the computing system 114. The anomaly management module 116 is configured for receiving an original input equipment data from one or more equipment 110 in a technical installation 102. The original input equipment data (?) comprises one or more sensor data associated with the one or more equipment 110 (?). Further, the anomaly management module 116 is configured for generating a reconstructed input equipment data associated with one or more equipment 110 based on a deep learning model. Furthermore, the anomaly management module 116 is configured for determining an anomaly associated with the original input equipment data based on a deviation between the original input equipment data and the reconstructed input equipment data. Also, the anomaly management module 116 is configured for validating the determined anomaly associated with the original input equipment data based on an anomalous prediction score. Additionally, the anomaly management module 116 is configured for outputting the validated anomaly associated with the original input equipment data on a user interface of user device(s)108A-N.

The anomaly management module 116 comprises deep learning network of one or more auto encoders capable of detecting the anomaly of the equipment 110. Each of the one or more auto encoders comprise a buffer memory.

The anomaly management module 116 may also be configured for learning data signatures of each equipment in the technical installation, considering change in data captured by the one or more sensing units. These trends could be seasonal where the patterns of original input equipment data may vary for example based on day or night conditions or for example, season-based conditions (such as winter, summer and the like). The learning also considers the noise associated with each equipment in the technical installation. Due to this learning, contextual anomalies are learnt without any prior knowledge of the operational conditions of the equipment.

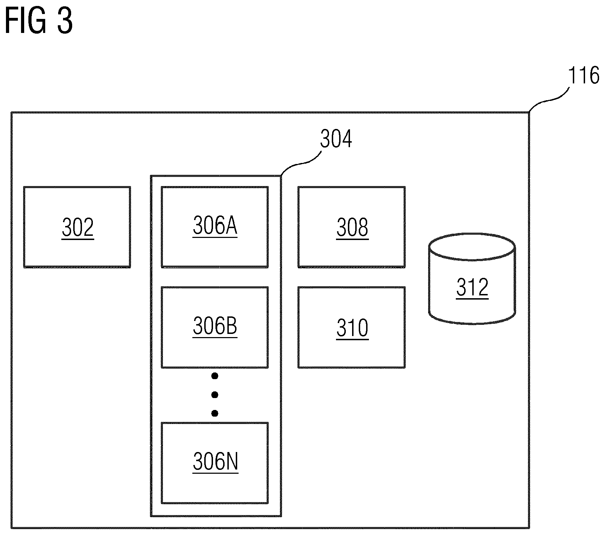

The detailed components of the anomaly management module 116 has been explained in FIG. 3.

The storage 118 is configured to store the input equipment data associated with the one or more equipment 110 in the technical installation 106 in a specific format. In an embodiment, the storage 118 may comprise a relational database (RDBMS), file system and not only SQL (NoSQL) database. The storage 118 are encrypted to secure all data stored. Further, the storage 118 is configured to store the deep learning models, updated deep learning models, original input equipment data, feature vectors, anomalous prediction score, encryption function, reconstruction error, anomalous score, reconstructed input equipment data, compressed knowledge representation, predefined rules for validation and the like. In an embodiment, the storage 118 stores all the data of the equipment 110 during an intermittent network connectivity. This data is then made available to the user devices 108A-N or the equipment 110 once the network connectivity is active.

The agent 120 is communicatively coupled to the computing system 114 and one or more neighboring agents 120A-N deployed in one or more neighboring technical installations. The agent 120 is configured for communicating deep learning models or updated deep learning models corresponding to the anomalies detected to other neighboring agents in the industrial environment 100.

The cloud computing system 106 is connected to the technical installation 102 via a network 104 (e.g., Internet). Although, FIG 1 illustrates the cloud computing system 106 connected to one technical installation 102, one skilled in the art can envision that the cloud computing system 106 can be connected to several technical installations located at different locations via the network 104.

Further, the cloud computing system 106 is also connected to user device(s) 108A-N via the network 104. The user devices 108A-N can access the computing system 114 for detecting anomalies of the equipment. The user devices 108A-N can be a laptop computer, desktop computer, tablet computer, smartphone and the like. The user devices 108A-N can access cloud applications (such as providing performance visualization of the one or more equipment 110) via a web browser.

In order to access the cloud applications, one or more artifacts are required to be deployed on a cloud platform, which are then accessed by personnel and computing system 114 in the technical installation 102 to avail the cloud applications. Therefore, the cloud computing system 106 is provided which is capable of handling anomalies detected. Exemplary artifacts may include applications (application for monitoring health and behavior of the one or more equipment 110), anomalies, simulation models, engineering configuration, digital twin models, code snippets, APIs, security applications, firmware and so on. The user device 108A-N may access the artifacts to avail cloud applications.

The cloud computing system 106 may comprise a cloud interface, cloud hardware and OS, cloud platform. The cloud interface enables communication between the cloud platform and the technical installation 102. Also, the cloud interface enables communication between the cloud platform and the user devices 108A-N.

The cloud hardware and OS may include one or more servers on which an operating system (OS) is installed. The one or more servers comprises one or more processing units, one or more storage devices for storing data, and other peripherals required for providing cloud functionality. The cloud platform is a platform which implements functionalities such as data storage, data analysis, data processing, data management, data validation, data visualization, data communication on the cloud hardware and OS via APIs and algorithms and delivers the aforementioned cloud services using artifacts. The cloud platform may comprise a combination of dedicated hardware and software built on top of the cloud hardware and OS.

The cloud computing system 106 may comprise a plurality of servers or processors (also known as 'cloud infrastructure'), which are geographical distributed, connected with each other via the network 104. A dedicated platform (hereinafter referred to as 'cloud platform') is installed on the servers/processors for providing above functionality as an application (hereinafter referred to as 'cloud application'). The cloud platform may comprise a plurality of software programs executed on one or more servers or processors of the cloud computing system 106 to enable delivery of the requested applications to the devices and its users.

One or more artifacts are deployed in the cloud computing system 106 to provide different applications to the user devices 108A-N. For example, an application for detecting anomalies of robots in a manufacturing facility may be deployed as an artifact. The application may be capable of analyzing the data collected from the robots over a period. The user device 108A-N may subscribe to cloud applications which analyzes data associated with robots using the application, and displays the outcome of analysis (e.g., outliers) to the user devices 108A-N via a web application on the user device 108A-N.

The cloud platform may enable a plurality of developers to develop the one or more artifacts. Also, the cloud platform may facilitate providers to deploy one or more artifacts developed by the developers in the cloud computing system 106 to deliver cloud applications to one or more user devices 108A-N. In an embodiment, the cloud platform handles the online learnings of the technical installation 102 is a decentralized manner, thus reducing the need for high network bandwidth. This would be advantageous in case if the network connectivity is limited at the technical installation 102.

FIG 2 is a block diagram of a computing system 114 such as those shown in FIG 1, depicting various components to implement embodiments of the present invention. In FIG 2, the computing system 114 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an anomalous detection module 116 stored in the form of machine-readable instructions on any of the above-mentioned storage media and may be in communication with and executed by the processor(s) 202.

When executed by the processor(s) 202, the anomalous detection module 116 causes the processor(s) 202 to receive an original input equipment data from one or more equipment 110 in a technical installation 102. The equipment data comprises one or more sensor data associated with the one or more equipment 110. Further, the anomaly management module 116 causes the processor(s) 202 to generate a reconstructed input equipment data associated with one or more equipment 110 based on a deep learning model. Furthermore, the anomaly management module 116 causes the processor(s) 202 to determine an anomaly associated with the original input equipment data based on a deviation between the original input equipment data and the reconstructed input equipment data. Also, the anomaly management module 116 causes the processor(s) 202 to validate the determined anomaly associated with the original input equipment data based on an anomalous prediction score. Additionally, the anomaly management module 116 causes the processor (s) 202 to output the validated anomaly associated with the original input equipment data on a user interface of user device(s)108A-N.

Further, in generating the reconstructed input equipment data associated with the one or more equipment 110 based on the deep learning model, the anomaly management module 116 causes the processor(s) 202 to compute one or more input feature vectors for the original equipment data. Further, the anomaly management module 116 causes the processor(s) 202 to determine correlation between the one or more input feature vectors comprised in the original input equipment data. Also, the anomaly management module 116 causes the processor(s) 202 to generate a compressed knowledge representation of the original input equipment data based on the determined correlation between the one or more input feature vectors. In an embodiment, in generating the compressed knowledge representation of the original input equipment data based on the determined correlation between the one or more input feature vectors, the anomaly management module 116 causes the processor(s) 202 to encode the original input equipment data into a compressed form using an encoder function. Further, the anomaly management module 116 causes the processor(s) 202 to generate the compressed knowledge representation based on the encoded input equipment data.

Further, the anomaly management module 116 causes the processor(s) 202 to generate a deep learning model based on the generated compressed knowledge representation of the original input equipment data. Additionally, the anomaly management module 116 causes the processor(s) 202 to generate the reconstructed input equipment data associated with the one or more equipment 110 based on the generated deep learning model.

Further, the anomaly management module 116 causes the processor(s) 202 to allocate the computed one or more input feature vectors to one or more auto encoders based on buffer size of the one or more auto encoders.

In an embodiment, in generating the reconstructed input equipment data associated with the one or more equipment 110 based on the generated deep learning model, the anomaly management module 116 causes the processor(s) 202 to decode the compressed form of the original input equipment data into the reconstructed input equipment data based on the generated deep learning model.

In an embodiment, in determining the anomaly associated with the original input equipment data based on the deviation between the original input equipment data and the reconstructed input equipment data, the anomaly management module 116 causes the processor(s) 202 to determine a deviation between the original input equipment data and the reconstructed input equipment data. Further, the anomaly management module 116 causes the processor(s) 202 to compute a reconstruction error for the reconstructed input equipment data based on the determined deviation. Furthermore, the anomaly management module 116 causes the processor(s) 202 to determining an anomaly score based on the computed reconstruction error. The anomaly score indicates the anomaly associated with the original input equipment data.

Further, in validating the determined anomaly associated with the original input equipment data based on the anomalous prediction score, the anomaly management module 116 causes the processor(s) 202 to obtain the anomaly score from one or more deep learning models associated with each auto encoders. The anomaly management module 116 causes the processor(s) 202 to compute the anomalous prediction score for the reconstructed input equipment data based on the obtained anomaly score and total number of auto encoders. Further, the anomaly management module 116 causes the processor(s) 202 to validate the determined anomaly associated with the original input equipment data based on the anomalous prediction score and predefined set of rules. The predefined set of rules comprises any standard validation rules known in the art.

Further, the anomaly management module 116 causes the processor(s) 202 to update the deep learning model with the validated anomaly associated with the original input equipment data. Further, the anomaly management module 116 causes the processor(s) 202 to store the updated deep learning model in a storage 118.

In outputting the validated anomaly associated with the original input equipment data on the user interface of the user device(s) 108A-N, the anomaly management module 116 causes the processor(s) 202 to generate a notification message comprising the validated anomaly associated with original input equipment data. The notification message comprises an event identifier, the input feature vector, deep learning model weight matrix, and inference label of validated anomaly. Further, the anomaly management module 116 causes the processor(s) 202 to determine neighboring agents deployed in plurality of technical installations. Furthermore, the anomaly management module 116 causes the processor(s) 202 to broadcast the generated notification message to the determined neighboring agents deployed in plurality of technical installations via the network 104.

The communication interface 206 is configured for establishing communication sessions between the one or more user device 108AN, the one or more equipment 110, the agent 120 and the cloud computing system 106. The communication interface 206 allows the one or more engineering applications running on the user devices 108A-N to import/export validated anomalies into the computing system 114. In an embodiment, the communication interface 206 interacts with the interface at the user devices 108A-N for allowing the engineers to access the anomalies of the equipment 110 and perform one or more actions on the detect anomalies stored in the storage 118. The network interface 208 helps in managing network communications between the one or more equipment 110, the agent 120 and the user devices 108A-N.

The input-output unit 210 may include input devices a keypad, touch-sensitive display, camera (such as a camera receiving gesture-based inputs), etc. capable of receiving one or more input signals, such as user commands to process equipment data. Also, the input-output unit 210 may be a display unit for displaying a graphical user interface which visualizes the equipment data and also displays the status information associated with each set of actions performed on the equipment data. The set of actions may include data entry, data modification or data display. The bus 212 acts as interconnect between the processor 202, the memory 204, and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 114 as is unique to the present disclosure or necessary for an understanding of the present disclosure is depicted and described. The remainder of the construction and operation of the computing system 114 may conform to any of the various current implementation and practices known in the art.

FIG 3 is a block diagram of an anomaly management module 116, such as those shown in FIG 1 and 2, capable of detecting anomalies of an equipment 110, according to the embodiment of the present invention. In FIG. 3, the anomaly detection module 116 comprises a feature vector computation module 302, a deep learning module 304, anomaly detection module 308, anomaly validation module 310 and visualization module 312.

The feature vector computation module 302 is configured to receive an original input equipment data from one or more equipment 110 in the technical installation 102. The original input equipment data comprises one or more sensor data associated with the one or more equipment 110 and one or more conditional data related to the one or more equipment 110. For example, the sensor data comprises measurable values of the equipment, such as, temperature values, pressure values, oil levels, etc. For example, temperature values comprise top oil temperature, conservator top temperature, conservator bottom temp, fin top temp, ambient temp, and the like. The conditional data related to the one or more equipment 110 comprises weather condition (such as for example, wind, humidity parameter, environmental temperature and the like), other objects placed near the equipment 110, . Upon receiving the original input equipment data, the feature vector computation module 302 is configured to compute one or more input feature vectors for the original equipment data. The one or more input feature vectors may be for example, 'conservator_top_timestep0', 'conservator_bottom_timestep0', 'conservator_rod_timestep0', 'fin_top_max', 'fin_bottom_min' and the like. For each of the one or more input feature vectors, maximum and minimum feature values are computed based on window size parameter (configurable) . The window size parameter is used while generating window features in feature engineering process. The window size parameter is used to calculate maximum, minimum, average values within a window for multiple or all sensor values captured by the sensing units 112AN
These computed one or more input feature vector is then fed to the deep learning module 304.

The deep learning module 304 comprises one or more auto encoders 306A-N. The one or more auto encoders 306A-N are also referred herein as ensemble of auto encoders 306A-N. Upon receiving the one or more input feature vectors, the deep learning module 304 is configured for allocating the computed one or more input feature vectors to one or more auto encoders 306A-N based on buffer size of the one or more auto encoders 306A-N. In an embodiment, it is first determined whether buffer size of current auto encoder, 306AN is full or not. If the buffer size of current auto encoder, 306AN is full, then the deep learning module 304 identifies a next auto encoder 306A-N and the computed input feature vector is pushed to the next auto encoder 306A-N. For example, the next auto encoder 306A-N is identified based on (X+1)%n, where X is the current auto encoder 306A-N whose buffer size is full, and n is the total number of auto encoders 306A-N.

Further, the deep learning module 304 is configured for determining correlation between the one or more input feature vectors comprised in the original input equipment data. The correlation between the one or more input feature vectors is determined based on learned data or trained datasets. Further, the deep learning module 304 is configured for generating a compressed knowledge representation of the original input equipment data based on the determined correlation between the one or more input feature vectors. A compressed knowledge representation is an output of the encoder function, in case of an auto encoder and is a representation of original input equipment data. Further, the deep learning module 304 is configured for encoding the original input equipment data into a compressed form using an encoder function and generating the compressed knowledge representation based on the encoded input equipment data. The compressed form of original input equipment data comprises a real valued vector representation with number of values (equal to the number of neurons in middle most layer of an auto encoder). The number of values in the compressed knowledge representation is usually less than the values in the one or more input features vector.
The encoder function is defined as h=f(x), where h is compressed representation obtained after encoding the original input equipment data using f(x) and f(x) is the encoder function.

Further, the deep learning module 304 is configured for generating a deep learning model based on the generated compressed knowledge representation of the original input equipment data.

Further, the deep learning module 304 is configured for generating a reconstructed input equipment data associated with the one or more equipment 110 based on the generated deep learning model. In an alternate embodiment, the deep learning module 304 is configured for decoding the compressed form of the original input equipment data into the reconstructed input equipment data based on the generated deep learning model. This is achieved using a decoder function r=g(h), where r is reconstructed input equipment data and g(h) is compressed knowledge representation. The reconstructed input equipment data comprises recreated original input equipment data along with one or more reconstruction errors.

In an embodiment, each auto encoder 306A-N generates the reconstructed input equipment data based on the feature vector fed to them. The reconstructed input equipment data of each auto encoders 306A-N comprises corresponding recreated original input equipment data and corresponding one or more reconstruction errors. All these reconstructed input equipment data are fed to the anomaly detection module 308.

The anomaly detector module 308 is configured for determining an anomaly associated with the original input equipment data based on a deviation between the original input equipment data and the reconstructed input equipment data. Specifically, the anomaly detector module 308 is configured for determining a deviation between the original input equipment data and the reconstructed input equipment data. The deviation between the original input equipment data and the reconstructed input equipment data is determined by any standard mechanism known in the art. Further, the anomaly detection module 308 is configured for computing the reconstruction error for the reconstructed input equipment data based on the determined deviation. The reconstructed errors measure the difference between the original input equipment data and the consequent reconstructed input equipment data. The reconstruction error is derived by L(X, X^), where X is the original input vector for a given timestamp and X^ is the reconstructed input equipment data.

Further, the anomaly detector module 308 is configured for determining an anomaly score based on the computed reconstruction error. The anomaly score indicates the anomaly associated with the original input equipment data. The anomaly score is derived by L(X, X^) + regularizer. A regularizer discourages memorization/overfitting. L(X, X^) is the reconstruction error. A scaling parameter is added in front of the regularization term so as to adjust the trade-off between the two objectives. The first objective is model has to be sensitive to the inputs (taken care by the term L(x, x^) in the loss function). The second objective is to avoid overfitting (taken care by the regularizer in the loss function). Also, here reconstruction error is the anomaly score and loss function is L(x, x^) + regularizer.

In an embodiment, anomaly scores for each reconstructed input equipment data of each auto encoders 306A-N is computed as above. Hence, anomaly scores indicate one or more detected anomalies. For example, if the computed anomaly score is greater than three times standard deviation of a gaussian model (described later), then the feature vector is predicted as anomalous by each of the auto encoder. The detected anomalies are fed to the validation module 310. In an embodiment, the anomaly detector module 308 is trained periodically before and after anomaly is detected.

The validation module 310 is configured for validating the determined anomaly or anomalies associated with the original input equipment data based on an anomalous prediction score. Specifically, the validation module 310 is configured for obtaining the anomaly scores from each of the auto encoders 306AN. Further, the validation module 310 is configured for computing the anomalous prediction score for the reconstructed input equipment data based on the obtained anomaly scores and total number of auto encoders 306A-N. Further, the validation module 310 is configured for validating the determined anomaly associated with the original input equipment data based on the anomalous prediction score and predefined set of rules. The anomalous prediction score depends on whether the auto encoders 306A-N have detected an anomaly or not and if the anomaly is detected, then whether such anomaly is an actual anomaly or a false positive. For example, if more than 50% of total auto encoders 306A-N predict the feature vector of the original input equipment data as anomalous, then the detected anomalies are validated as to be the actual anomalies and not a false positive. This is done using the anomalous prediction score.

In other case, if for example 50% of the total auto encoders 306AN predict the feature vector of the original input equipment data as anomalous and other 50% of the total auto encoders 306A-N predict the feature vector of the original input equipment data as not anomalous, then another step of validation may be performed by the validation module 310 on the detected anomalies. For example, predefined set of rules is applied on the detected anomalies to validate if the detected anomaly is actual anomaly or a false positive. If in case the detected anomaly is declared as false positive, then such feature vector corresponding to the anomaly is removed from the buffer of the auto encoder 306A-N and is updated accordingly in the storage 118 as a new learning. This prevents further occurrences of the false positives. Active learning using reinforcement learning may be used to handle feedback to the learning.

Further, the validation module 310 is configured for updating the deep learning model with the validated anomaly associated with the original input equipment data and storing the updated deep learning model in the storage 118.

The visualization module 312 is configured for outputting the validated anomaly associated with the original input equipment data on a user interface of the user device (s) 108A-N. Specifically, the visualization module 312 is configured for generating a notification message comprising the validated anomaly associated with original input equipment data. The notification message comprises an event identifier, the input feature vector, deep learning model weight matrix, and inference label of validated anomaly. The event identifier may comprise a unique ID used by each agent 120A-N in order to identify the detected anomaly. The deep leaning model weight matrix is the weights of the autoencoders 306A-N that are captured in a three-dimensional matrix of dimension Ex L x N. Where, E is the size of the ensemble of auto encoders 306A-N, i.e. the number of autoencoders 306A-N; L is the maximum number of layers amongst all autoencoders 306A-N and N is the maximum number of neurons in a single layer amongst all autoencoders 306A-N. The inference label of validated anomaly indicates a class of anomaly.

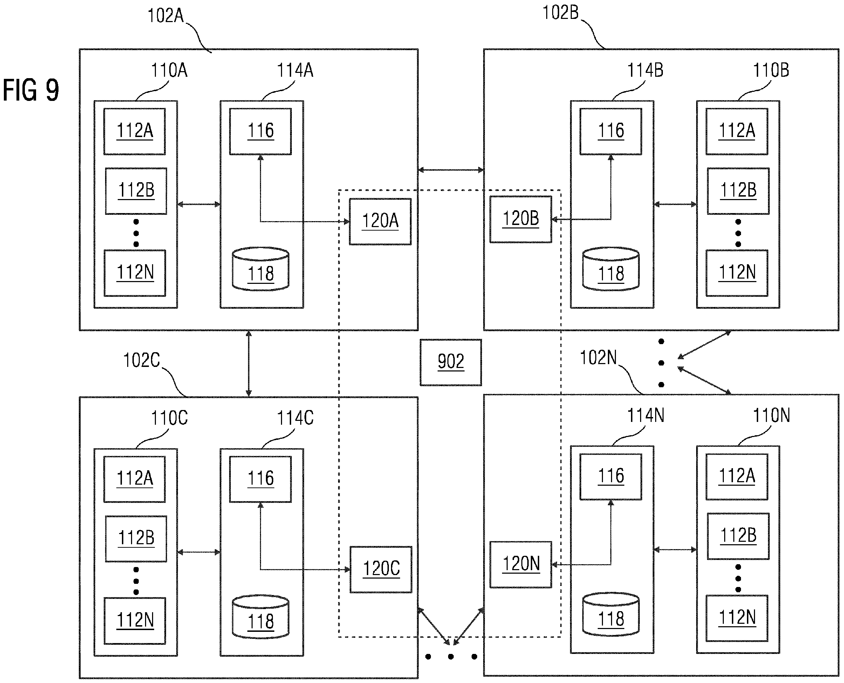

Further, the visualization module 312 is configured for determining neighboring agents 120A-N deployed in plurality of technical installations and broadcasting the generated notification message to the determined neighboring agents 120A-N deployed in plurality of technical installations via the network 104. The process of broadcasting the notification message to all agents is explained in FIG. 9.

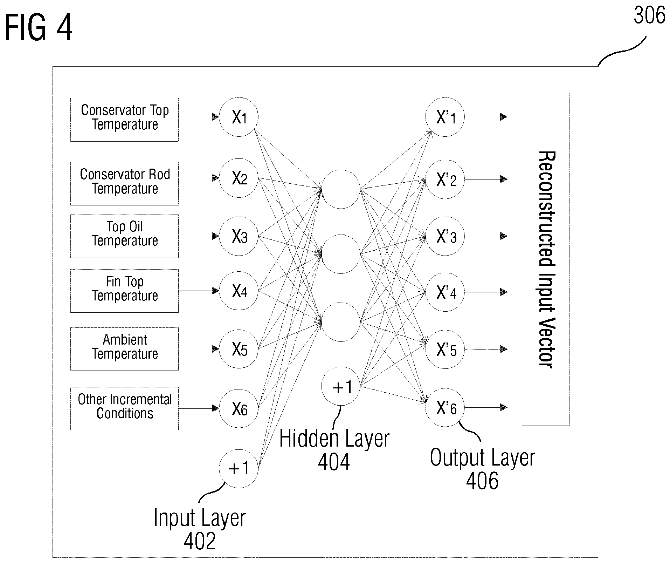

FIG 4 is a block diagram of an auto encoder 306 such as those shown in FIG. 3, according to an embodiment of the present invention. The deep learning module 304 comprises one or more auto encoders 306A-N. In FIG. 3, one such auto encoder 306 is disclosed. The auto encoder 306 uses an unsupervised learning technique for learning normal behavior of an equipment, such as equipment 110. Any deviations from the normal behavior is detected as an anomaly. The auto encoder 306 learns features from the original input equipment data for detecting contextual anomalies. **The auto encoder 306** leverages neural networks for the task of representation learning. Specifically, the auto encoder based neural network reconstructs the original input equipment data as their output.

The autoencoders 306 represent both linear and non-linear transformation in encoding. Also, autoencoders 306 is layered to form a deep learning network. The training of autoencoder 306 can be done by minimizing the reconstruction error.

The auto encoder 306 comprises an input layer 402, a hidden layer or middlemost layer 404 and an output layer 406. The input layer 402 analyzes the inputs in the form of feature vectors. For example, conservation top temperature, top oil temperature, fin top temperature, ambient temperature, other environmental conditions (which are included in the original equipment data) are the feature vectors fed into the input layer 402.

The middlemost layer 404 learns a compressed knowledge representation of the original input equipment data. Specifically, the middle most layer 404 learns the correlation between the input feature vectors and develops a compressed knowledge representation of the original input equipment data. Further, the middle most layer 404 also generates a deep learning model based on this compressed knowledge representation. This deep learning model is further used by the output layer 406 to predict either on the trained data or on a test data and compute the reconstruction error (as described above) . The output layer 406 then fits a gaussian model on the reconstruction error computed. The gaussian model is updated frequently as continuous learning progresses. In case of training the auto encoder 306 initially, mini-batch gradient descent is used. For continuous learning of the auto encoder 306 thereafter, stochastic gradient descent is used. In an embodiment, all auto encoders 306A-N are trained as above in a round robin fashion. This feature of auto encoder training allows to capture any concept drift in the original input equipment data while preventing learning of any anomalies.

In an embodiment, reconstructed error computed by the output layer 406 is then used by the anomaly detection module 308 to detect the anomalies. For example, the output layer 406 reconstructs most common or frequently occurring input feature vectors accurately. However, the uncommon or new input feature vectors generates errors in reconstruction, referred herein as 'reconstruction error'. This reconstruction error in reproduction is the basis of the anomaly score which determines whether the value associated with the specific input feature vector is anomalous or not.

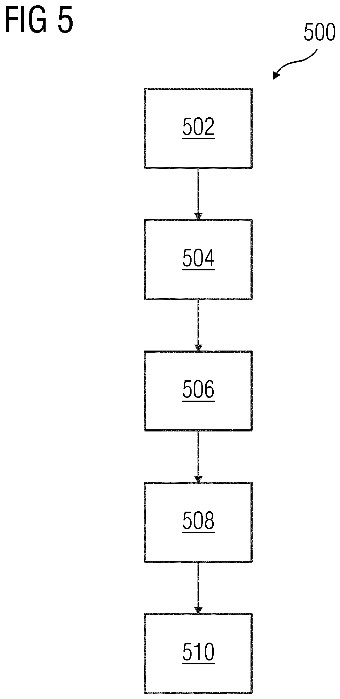

FIG 5 is a process flowchart illustrating an exemplary method 500 of detecting anomalies of an equipment 110, according to the embodiment of the present invention. At step 502, an original input equipment data is received from one or more equipment 110 in a technical installation. The equipment data comprises one or more sensor data associated with the one or more equipment 110. At step 504, a reconstructed input equipment data associated with one or more equipment 110 is generated based on a deep learning model. At step 506, an anomaly associated with the original input equipment data is determined based on a deviation between the original input equipment data and the reconstructed input equipment data. At step 508, the determined anomaly associated with the original input equipment data is validated based on an anomalous prediction score. At step 510, the validated anomaly associated with the original input equipment data is outputted on a user interface of user device 108A-N.

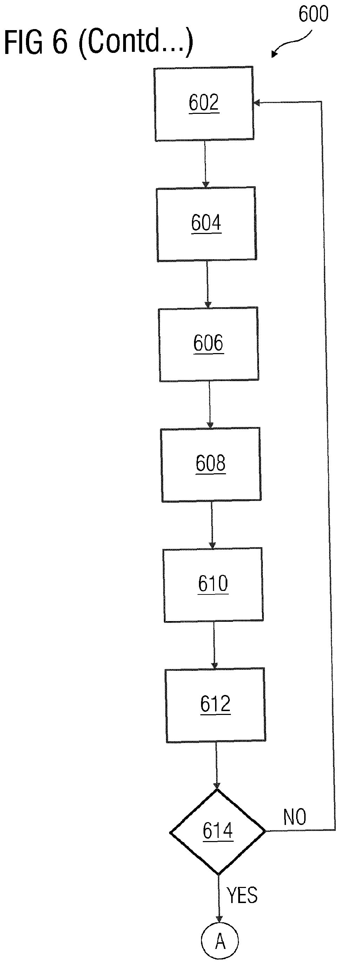

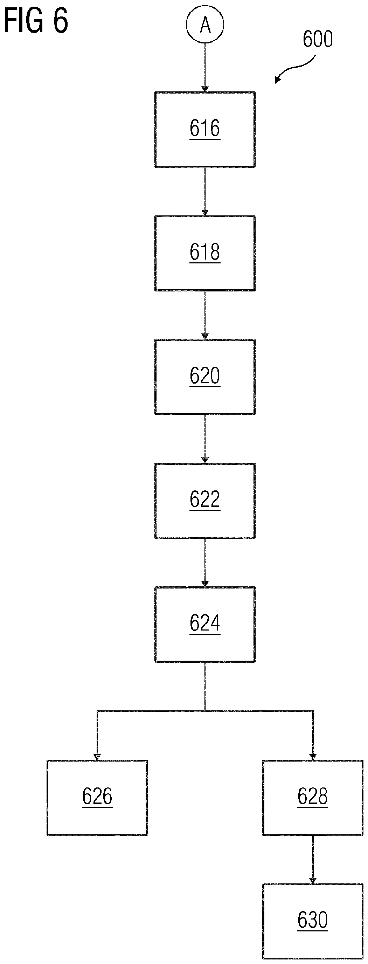

FIG 6 is a process flowchart illustrating an exemplary method 600 of detecting anomalies of an equipment 110, according to another embodiment of the present invention. At step 602, an original input equipment data is received from one or more equipment 110 in the technical installation 102. The original input equipment data comprises one or more sensor data associated with the one or more equipment. At step 604, one or more input feature vectors for the original equipment data is computed. At step 606, correlation between the one or more input feature vectors comprised in the original input equipment data is determined. At step 608, a compressed knowledge representation of the original input equipment data is generated based on the determined correlation between the one or more input feature vectors. At step 610, a deep learning model is generated based on the generated compressed knowledge representation of the original input equipment data. At step 612, the reconstructed input equipment data associated with the one or more equipment is generated based on the generated deep learning model.

At step 614, it is determined whether any deviation between the original input equipment data and the reconstructed input equipment data is present. If no, then the process goes back to the step of periodically receiving the original input equipment data. If yes, then at step 616, a reconstruction error for the reconstructed input equipment data is computed based on the determined deviation. At step 618, an anomaly score is determined based on the computed reconstruction error. The anomaly score indicates the anomaly associated with the original input equipment data. At step 620, the anomaly score is obtained from each of the one or more auto encoders 306A-N. At step 622, the anomalous prediction score for the reconstructed input equipment data is computed based on the obtained anomaly score and total number of auto encoders 306A-N. At step 624, the determined anomaly associated with the original input equipment data is validated based on the anomalous prediction score and predefined set of rules. At step 626, the validated anomaly associated with the original input equipment data is outputted on a user interface of user device (s) 108A-N. Simultaneously, at step 628, the deep learning model is updated with the validated anomaly associated with the original input equipment data. At step 630, the updated deep learning model is stored in a storage 118.

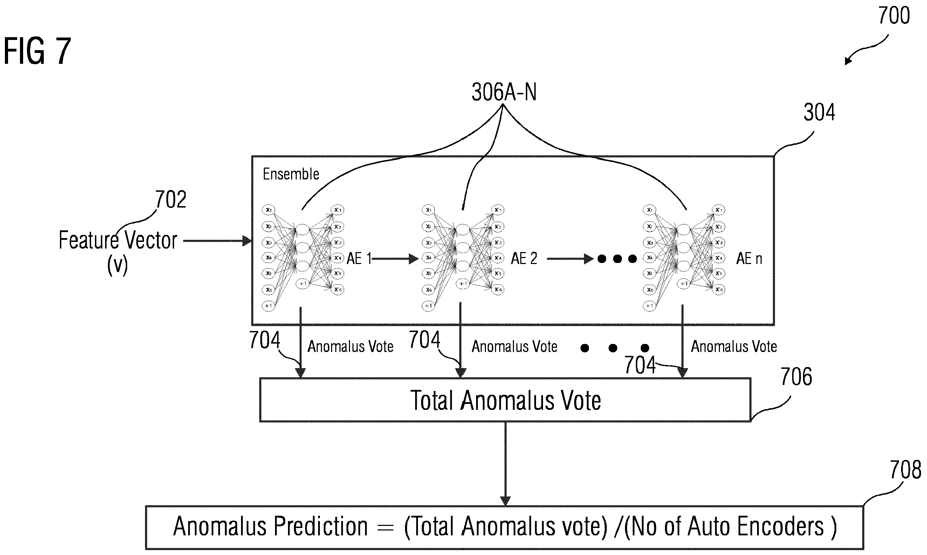

FIG 7 is a process flowchart illustrating an exemplary method 700 of validating anomaly associated with an original input equipment data based on anomalous prediction score, according to an embodiment of the present invention. At step 702, an input feature vector is fed into the deep learning module 304. The deep learning module 304 comprises ensemble of auto encoders 306A-N. At step 704, output of each auto encoders 306A-N is determined. This output is an anomalous vote. In an embodiment, each auto encoders 306A-N generates the reconstructed input equipment data as described above Specifically, the output of each auto encoders 306A-N comprises an anomalous vote as whether the input feature vector, say v, is an anomaly or not. This vote is corresponding to the anomalous score computed by each of the auto encoders 306A-N. That is, according to that particular auto encoder, say for example, 306A, the anomaly score of this auto encoder 306A indicates whether feature vector v is an anomaly or not. Similarly, this is the same criteria for other auto encoders 306A-N. Based on this anomaly vote of each auto encoders 306A-N, at step 706, a total anomalous vote is computed which is the sum of the anomaly vote of each auto encoders 306A-N. At step 708, an anomalous prediction score is computed based on the total anomalous vote and number of auto encoders 306A-N. This anomalous prediction score is then used for validating anomaly associated with the original input equipment data.

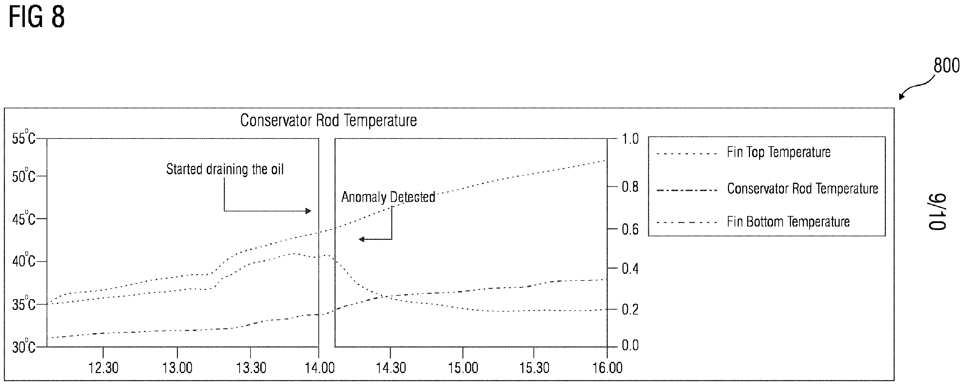

FIG 8 is a graphical representation of detected anomaly on a user interface of a user device 108A-N, according to an embodiment of the present invention. In FIG. 8, anomalies detected for one or more input feature vectors, for example, conservator rod temperature, fin top temperature, fin bottom temperature, is outputted in the form of a graphical representation. For example, the graph depicts the trends of the feature vectors and also indicates the behavior of the equipment 110, such as in this case a transformer.

FIG 9 is a schematic representation of an industrial environment 900 capable of detecting anomalies of an equipment 110, according to another embodiment of the present invention. IN FIG. 9, the industrial environment 900 comprises multiple technical installations 102A-N connected to a central multi agent component 902 via respective agents 120A-N. Each technical installation 102A-N comprises an equipment 110, a computing system 114 and the agent 120A-N. The equipment 110 comprises one or more sensing units 112A-N. The one or more sensing units 112A-N may be different types of sensors configured for capturing real-time data associated with the equipment 110. Further, the computing system 114 comprises an anomaly management module 116 and a storage 118. The computing system 114 is similar to those explained above.

The agents 120A-N is communicatively coupled to other agents 120AN placed in the industrial environment 900. The agents constantly learn the anomalies detected in one technical installation, say 102A and broadcasts the detected anomalies to other technical installations, say 102B-N via the agents 120B-N. This helps is handling any kind of anomalies encountered by the equipment 110. The communication network between these agents 120A-N is a connected graph. Each agent 120A-N is tasked with maximizing knowledge and improving their own deep learning models for anomaly detection. Further, such communication between the agents 120A-N helps in rapidly adapting to the changes in industrial environment 900. Each agents 120A-N comprises ensemble of autoencoders, such as 306A-N for continuous learning.

In an embodiment, the agents 120A-N share the learnings or trained deep learning models with other agents 120A-N by exchanging notification messages. The notification message sharing is event driven. When an anomaly is detected by the agent 120A-N, it updates the deep learning model with the detected anomaly. The event of updating the deep learning model triggers the respective agent, say 120A, to broadcast the notification message to neighboring agents, say 120B-N in the industrial environment 900. This continues across the entire system. When the agent, say 120A receives the notification message, the agent 120A has two states to choose to be in. One is the current state, Sc or the other is the updated state, Su. The decision to change the state depends on whether in current state Sc, the agent's model is inferior to the model in updated state Su. To determine this, the agent 120A first uses the input feature vector with the existing deep learning model stored in the storage 118. If the inference label value in the notification message matches, then the agent 120A continues to be in the current state Sc. If not, then the agent 120A updates the current deep learning model with weights from the updated deep learning model according to the notification message received from the computing system 114. Later, the agent 120A broadcasts this notification message to the neighboring agents 120B-N. The neighboring agent 120B-N drops the notification message if the event ID, E, is already in the history of events stored in the respective storage. Over a few cycles, all agents 120A-N has updated deep learning models.

In an embodiment, the notification message comprises an event identifier, the input feature vector, deep learning model weight matrix, and inference label of validated anomaly. The event identifier, ID (El) is a unique ID used by each agent 120A-N to identify the event. Each agent 120A-N maintains a history of event which have been used to update the deep learning models. The input Feature Vector I, is the same as the feature vector used as input to the deep learning module 304. The deep learning model weight matrix is weights of the autoencoder 306A-N captured in a three dimension (3D) matrix of dimension Ex L x N, where E is the number of autoencoders 306A-N; L is the maximum number of layers amongst all autoencoders 306A-N and N is the maximum number of neurons in a single layer amongst all autoencoders 306A-N in the autoencoders 306A-N. The inference Label (0)is the value indicating class of anomaly.

The central multi agent component 902 acts as a central server routing the communications across the agents 120A-N. In case if an agent 120A-N is down due to connection issue or any other reason, the central multi agent component 902 ensures that the communication is temporary stored in its own storage and is forwarded back to that agent 120A-N when it is in operation.

The present invention provides a decentralized, continuously learning and a context aware method and system for real time condition monitoring and anomaly detection in equipment using artificial intelligence methods. In an exemplary embodiment, the method uses an unsupervised setting to achieve this.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

100-industrial environment
102-technical installation
104-network
106-cloud computing system
108A-N-one or more user devices
110-one or more equipment
112A-N-one or more sensing unit
114-computing system
116- anomaly management module
118-storage
120- anomalous agent
202-processor
204-memory
206- a communication interface
208 a network interface
210 an input/output unit
212 bus
302- a feature vector computation module
304- a deep learning module
306A-N- autoencoders
308-anomaly detection module
310 anomaly validation module
312 visualization module
402-input layer
404-middlemost layer
406-output layer
900-industrial environment
902- central multi agent component

## Claims

1. A method for detecting an anomaly of an equipment (110) in an industrial environment (100), wherein the method comprising:
receiving, by a processor (202), an original input equipment data from one or more equipment (110) in a technical installation (102), wherein the original input equipment data comprises one or more sensor data associated with the one or more equipment (110);**characterized in that**:
generating, by the processor (202), a reconstructed input equipment data associated with one or more equipment (110) based on a deep learning model;
determining, by the processor (202), an anomaly associated with the original input equipment data based on a deviation between the original input equipment data and the reconstructed input equipment data;
validating, by the processor (202), the determined anomaly associated with the original input equipment data based on an anomalous prediction score; and
outputting, by the processor (202), the validated anomaly associated with the original input equipment data on a user interface of user device(s) (108A-N).

2. The method according to claim 1, wherein generating the reconstructed input equipment data associated with the one or more equipment (110) based on the deep learning model comprises:
computing one or more input feature vectors for the original equipment data;
determining correlation between the one or more input feature vectors comprised in the original input equipment data;
generating a compressed knowledge representation of the original input equipment data based on the determined correlation between the one or more input feature vectors;
generating a deep learning model based on the generated compressed knowledge representation of the original input equipment data; and
generating the reconstructed input equipment data associated with the one or more equipment based on the generated deep learning model.

3. The method according to claim 2, wherein:
allocating the computed one or more input feature vectors to one or more auto encoders (306A-N) based on buffer size of the one or more auto encoders (306A-N).

4. The method according to one of the preceding claims, wherein generating the compressed knowledge representation of the original input equipment data based on the determined correlation between the one or more input feature vectors comprises:
encoding the original input equipment data into a compressed form using an encoder function; and
generating the compressed knowledge representation based on the encoded input equipment data.

5. The method according to one of the preceding claims, wherein generating the reconstructed input equipment data associated with the one or more equipment (110) based on the generated deep learning model comprises:
decoding the compressed form of the original input equipment data into the reconstructed input equipment data based on the generated deep learning model.

6. The method according to claims 1 or 2, wherein determining the anomaly associated with the original input equipment data based on the deviation between the original input equipment data and the reconstructed input equipment data comprises:
determining a deviation between the original input equipment data and the reconstructed input equipment data;
computing a reconstruction error for the reconstructed input equipment data based on the determined deviation; and
determining an anomaly score based on the computed reconstruction error, wherein the anomaly score indicates the anomaly associated with the original input equipment data.

7. The method according to one of the preceding claims, wherein validating the determined anomaly associated with the original input equipment data based on the anomalous prediction score comprises:
obtaining the anomaly score from each of the one or more auto encoders (306A-N);
computing the anomalous prediction score for the reconstructed input equipment data based on the obtained anomaly score and total number of auto encoders (306A-N); and
validating the determined anomaly associated with the original input equipment data based on the anomalous prediction score and predefined set of rules.

8. The method according to one of the preceding claims, further comprising:
updating the deep learning model with the validated anomaly associated with the original input equipment data; and
storing the updated deep learning model in a storage (118) .

9. The method according to one of the preceding claims, wherein outputting the validated anomaly associated with the original input equipment data on the user interface of the user device(s) (108A-N)comprises:
generating a notification message comprising the validated anomaly associated with original input equipment data;
determining neighboring agents (120A-N) deployed in plurality of technical installations (106A-N); and
broadcasting the generated notification message to the determined neighboring agents (120A-N) deployed in plurality of technical installations (102A-N) via a network (104).

10. The method according to claim 9, wherein the notification message comprises an event identifier, the input feature vector, deep learning model weight matrix, and inference label of validated anomaly.

11. A computing system (114) for detecting an anomaly of an equipment (110) in an industrial environment (100), comprising:
one or more processor(s) (202); and
a memory (204) coupled to the one or more processor (s) (202), wherein the memory (204) comprises anomaly management module (116) stored in the form of machine-readable instructions executable by the one or more processor(s) (202), wherein the anomaly management module (116) is capable of performing a method according to any of the claims 1-10.

12. The computing system according to claim 11, wherein the anomaly management module (116) comprises deep learning network of one or more auto encoders (306A-N) capable of detecting the anomaly of the equipment (110), wherein each of the one or more auto encoders (306A-N) comprises a buffer memory.

13. A technical installation (102A-N)comprising:
one or more equipment (110);
one or more sensing units (112A-N) coupled to the one or more equipment (110) configured for:
capturing real-time equipment data associated with the one or more equipment (110);
a computing system (114) comprising an anomaly management module (116) communicatively coupled to the one or more sensing units (112A-N), wherein the anomaly management module (116) is configured for performing a method according to claims 1-10; and
an agent (120A-N) communicatively coupled to the computing system (114) and one or more neighboring agents (120A-N) deployed in one or more neighboring technical installations (102A-N).

14. An industrial environment (100) comprising:
one or more user devices (108A-N);
one or more technical installation (102A-N) comprising a computing system (114) as claimed in claim 11; and
a cloud computing system (106) communicatively coupled to the one or more technical installation (102AN) and the one or more user devices (108A-N) via a network (104).

15. A computer-program product, having machine-readable instructions stored therein, that when executed by a processor(s) (202), cause the processor(s) (202) to perform method steps according to any of the claims 1-10.
